# EUROPEAN PATENT SPECIFICATION

(11) **EP 1 825 306 B1**
(45) Date of publication and mention of the grant of the patent: **04.04.2012**
(21) Application number: 04801374.2
(22) Date of filing: 13.12.2004
(51) Int. Cl.: G02B 27/00, G02B 5/32, G02B 6/00

(54) **SYSTEM AND METHOD FOR BEAM EXPANSION WITH NEAR FOCUS IN A DISPLAY DEVICE**
SYSTEM UND VERFAHREN ZUR STRAHLERWEITERUNG MIT NAHEM BRENNPUNKT IN EINER ANZEIGEEINRICHTUNG
SYSTEME ET PROCEDE POUR L'EXPANSION DE FAISCEAUX AVEC MISE AU POINT PROCHE DANS UN DISPOSITIF D'AFFICHAGE

(43) Date of publication of application: 29.08.2007
(73) Proprietor: Nokia Corporation, 02150 Espoo (FI)
(72) Inventor: LEVOLA, Tapani, FIN-33270 Tampere (FI); LAAKKONEN, Pasi, FIN-80140 Joensuu (FI)
(74) Representative: Cohausz & Florack
(86) International application number: PCT/IB2004/004094
(87) International publication number: WO 2006/064301

(56) References cited:
- WO-A-99/52002
- WO-A-2004/013677
- US-A- 5 701 132
- US-A1- 2003 063 042
- US-A1- 2004 061 915

## Description

### Field of the Invention

The present invention relates generally to a display device to be used in an electronic device, preferably a portable communication device and, more specifically, to a display device that uses one or more light-coupling elements for extending the exit pupil of the display device for viewing.

### Background of the Invention

While it is a common practice to use a low-resolution liquid-crystal display (LCD) panel to display information, especially image and text messages in a portable device, it is preferred to use a high-resolution display to browse rich information content of text and images. A so-called microdisplay-based system can provide full color pixels at 50-100 lines per mm. Such a high resolution is generally suitable for a virtual display. A virtual display typically consists of a microdisplay to provide an image and an optical arrangement for manipulating light emerging from the image in such a way that it is perceived as large as a direct view display panel. A virtual display can be monocular or binocular.

The size of the beam of light emerging from imaging optics toward the eye is called the exit pupil. In a Near-To-Eye Display (NTE or NED), the exit pupil is typically of the order of 10 mm in diameter. Further enlarging the exit pupil makes using the virtual display significantly easier, because the device can be put at a distance from the eye. Thus, such a display no longer qualifies as an NED, for obvious reasons. Head-Up Displays are an example of the virtual display with a sufficiently large exit pupil.

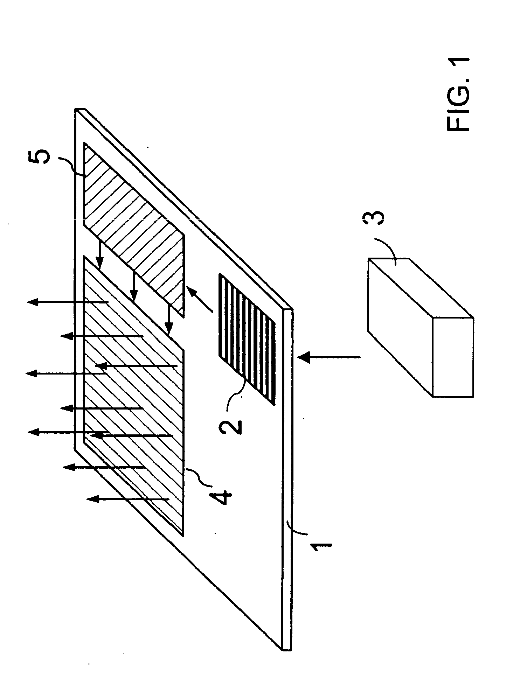

Prior art WO 99/52002 discloses a method of enlarging the exit pupil of a virtual display. The disclosed method uses three successive holographic optical elements (HOEs)or Diffractive Optical Elements (DOE) to enlarge the exit pupil. As shown in Figure 1, referring to this prior art, the HOEs are diffractive grating elements arranged on a planar, light transmissive light-guiding structure or substrate 1. As shown, light from an image source 3 is incident upon the first HOE2, which is disposed on one side of the substrate 1. Light from HOE2, coupled into the substrate 1, is directed toward the second HOE5, where the distribution of light is expanded in one direction. HOE5 also redirects the expanded light distribution to the third HOE4, where the light distribution is further expanded in another direction. The holographic elements can be on any side of the substrate 1. HOE4 also redirects the expanded light distribution outward from the substrate surface on which HOE4 is disposed. The optical system, as shown in Figure 1, operates as a beam-expanding device, which maintains the general direction of the light beam. Such a device is also referred to as an exit pupil extender (EPE).

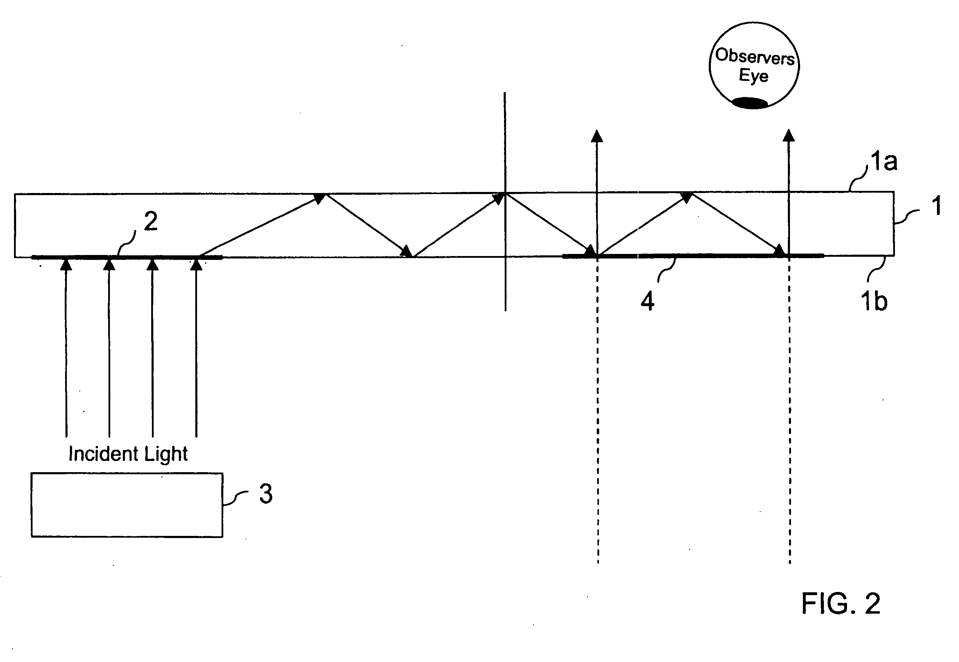

In another type of Exit Pupil Extender as shown in Figure 2, which refers to a prior art device as internally known in the house of the applicant, only two successive holographic optical elements (HOEs) are used. The first HOE2, typically has a diffractive structure consisting of parallel diffractive fringes for coupling incident light into the substrate 1 and directing the light distribution within the substrate 1 towards the second HOE4. The substrate 1 acts as a light guide to trap the light beams between its two surfaces 1a, 1b mainly by means of total internal reflection. As shown in Figure 2, the diffractive elements HOE2 and HOE4 are both disposed on the lower surface of the substrate 1. As the two diffractive elements HOE2 and HOE4 are arranged adjacent to each other, the light distribution is expanded in one direction by diffractive element HOE4.

In a virtual display using an exit pupil extender of the type aforementioned and shown in Figure 2, the focal point is always located at infinity which means that the observer's eye receives the outcoupled light rays as if emanating from infinity. This has the drawback that the ergonomics of this display is reduced, because for certain applications it is much more comfortable for a viewer to view the image at a distance shorter than infinity.

It is therefore advantageous and desirable to provide a method and system for improving the ergonomics of an optical device, a virtual display and.more specifically of its exit pupil extender.

### Summary of the Invention

It is a primary objective of the present invention to improve the ergonomics of a virtual optical display, especially the exit pupil extender of which display.

Thus, according to the first aspect of the present invention, there is provided an optical device, which comprises:
a light-guiding structure for guiding optical waves by means of total internal reflection, having two opposite major surfaces extending essentially parallel to the major plane of the structure,
a first light-coupling element being carried by one of the opposite major surfaces of said structure for incoupling optical waves from an image source into the light-guiding structure,
at least one second light-coupling element being carried by one of the opposite major surfaces of said structure and being laterally displaced along the major plane of the structure from said first light-coupling element for outcoupling optical waves out of said structure to be viewed by an observer's eye,
the optical device further characterized in that
at least one of the opposite major surfaces at the location of at least one of the first and the at least one second light-coupling element of the light-guiding structure comprises a given finite curvature radius corresponding to the apparent focal distance for producing a virtual image at the preferable focal distance.

Accordingly, the device according to this aspect of the invention has the advantage that the radius of curvature corresponds exactly to the focal distance. This means that compared to the prior art device, the focal point will be changed to be finite which means that all the outcoupled rays seem to emanate from this finite focal point. The ergonomics of the optical device is thus improved, because it is more comfortable for an observer to observe an image that appears to be at a distance shorter than infinity.

Preferably, the centres of curvature are the same for the two opposite major surfaces of the light guiding structure, respectively. This allows for a simple construction of the light guiding structure.

Preferably, the curvature radius corresponding to the focus distance is at least 0,5m,preferaly in the range of 0,5m - 1,5m.

Preferably, the light-coupling elements are located on the same side of the light-guiding structure.

Preferably, at least one of the first and/or the at least one of the second light-coupling elements is a diffractive element.

Preferably, both the first and the at least one second light coupling element are diffractive elements and the first and the at least one second light-coupling elements are arranged on a cylindrical surface which cylindrical axis is parallel to grating lines provided in said light-coupling elements.

Preferably, at least one of the first and the at least one second diffractive elements are comprised of surface relief structures.

Preferably, at least one of the first and the at least one second light-coupling element is a holographic optical element.

Preferably, the said holographic optical element is embodied in said light-guiding structure by recording said element as an interference pattern of two mutually coherent optical waves.

Preferably, the image source is a sequential color LCOS (Liquid Crystal On Silicon) device, an OLED (Organic Light Emitting Diode) array, a MEMS (MicroElectro Mechanical System) device or any other suitable micro-display device operating in transmission, reflection or emission.

According to the second aspect of the present invention the use of a virtual display unit, which produces the virtual image at preferable focal distance, comprising the optical device of claim 1 is provided.

According to the third aspect of the present invention, there is provided a means for extending the exit pupil of an electronic device comprising the optical device of claim 1.

According to the fourth aspect of the present invention, there is provided a method for extending the exit pupil of an optical system comprising the following steps:
incoupling optical waves from an image source into a light-guiding structure by means of a first light-coupling element being carried by a light-guiding structure having two opposite major surfaces extending essentially parallel to the major plane of the structure,
wherein the optical waves propagate in said structure by means of total internal reflection,
outcoupling optical waves out of said structure by means of at least one second light-coupling element being carried by one of the opposite major surfaces of said structure and being laterally displaced along the major plane of the structure from said first light-coupling element, said method further characterized by the curvature radius of at least one of the opposite major surfaces at the location of at least one of the first and the at least one second light-coupling element of the light-guiding structure having a finite value corresponding to the apparent focal distance for producing a virtual image at the preferable focal distance.

An additional aspect of the invention is the use of the means for extending the exit pupil in a portable device such, as a mobile phone, personal digital assistant (PDA), communicator, portable Internet appliance, hand-held computer, digital video and still camera, wearable computer, computer game device, specialized bring-to-the-eye product for viewing and other portable electronic devices.

Another aspect of the invention is the use of the means for extending the exit pupil in a non-portable device, such as a gaming device, vending machine, bank-o-mat, home appliance, such as an oven, microwave oven and other appliances, and other non-portable electronic devices.

### Brief description of the drawings

Figure 1 is a schematic representation showing an exit pupil extender using three diffractive elements according to the prior art.
Figure 2 is a schematic representation showing an exit pupil extender using two diffractive elements according to the prior art.
Figure 3 is a schematic representation showing an exit pupil extender (EPE) according to the present invention.
Figure 4 is a schematic representation that shows a mobile communication device having a virtual display system.

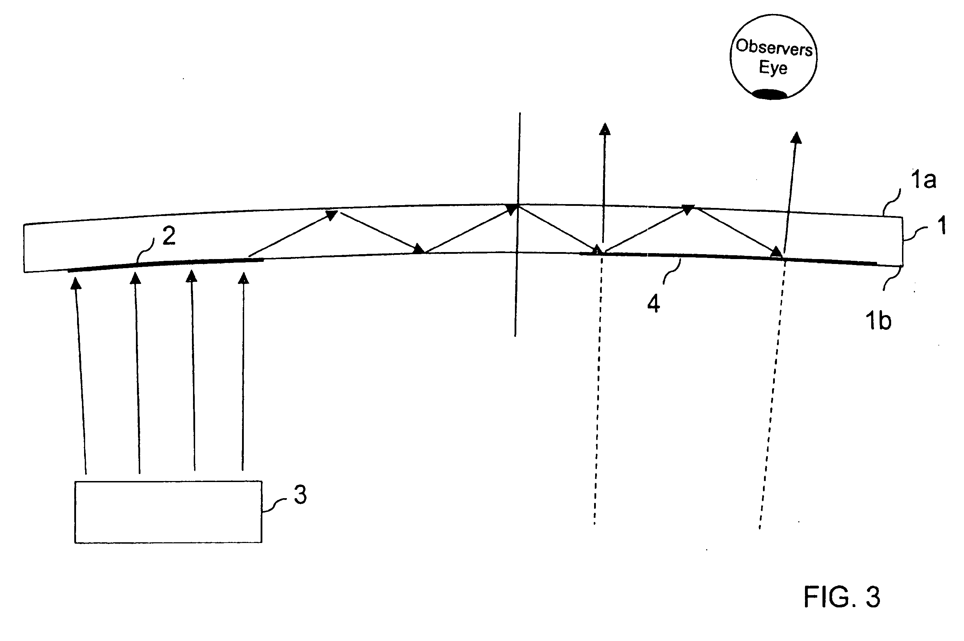

As shown in figure 3, a light-guiding structure 1 has two opposite major surfaces 1a, 1b. Essentially, these major surfaces 1a, 1b extend parallel to the major plane of the structure 1.

At the side of its major surface 1b a first light-coupling element 2 is arranged which is used for incoupling optical waves incoming from an image source 3.

It should be noted that each of the diffractive elements 2 and 4 could be a holographic diffractive element (HOE) or a diffractive optical element (DOE). As the name suggests, a holographic diffraction element is holographically produced where at least two coherent light beams are used to produce interference fringes. In contrast, a diffraction optical element can be mechanically or chemically produced. The EPE as shown in figure 3 can have two or more diffractive elements.

Both types of elements are based on periodic structures, while the structures in the DOEs are generally simpler and usually surface relief structures. In contrast to that, HOEs are typically volume structures, which means that they can have a depth much more than the used wave - lengths.

Furthermore, a second light-coupling element 4 is also on the the major surface 1b of the light-guiding structure 1. The second light-coupling element 4 is laterally displaced along the major plane of the light-coupling structure 1 from the first light-coupling element 2 and serves for outcoupling optical waves out of said light-guiding structure 1 in a way described in the following.

The transfer of the light-waves from light-coupling element 2 to light-coupling element 4 proceeds by means of total internal reflection within the light-guiding structure 1.

As further can be shown from figure 3, the light-guiding structure 1 is not of a perfect planar shape but has a specific curvature radius. Both major surfaces 1a, 1b of the structure 1 have a common centre of curvature. The curvature radius of the light-guiding structure 1 is designed in a way that the observer's eye focuses the image not from infinity but from a finite distance because the curvature radius corresponds to the focus viewed by the observer. For example, it is desired that the observer views the object in a range between 0,5m and infinity, preferably at a distance of 1m. This is more comfortable to the observer than to observe the image at a very short distance, i.e. 5cm, or at a very long distance, i.e. infinity.

Thus, the present invention uses on one hand the exit pupil extending effect given by the light-coupling elements 2,4 and the shifting of the focal point from infinity to a finite distance due to the design of the curvature radius on the other hand.

The exit pupil extender described above can be used in a portable device, such as a mobile phone, personal digital assistant (PDA), communicator, portable Internet appliance, hand-hand computer, digital video and still camera, wearable computer, computer game device, specialized bring-to-the-eye product for viewing and other portable electronic devices. However, the exit pupil extender can also be used in a non-portable device, such as a gaming device, vending machine, bank-o-mat, home appliance, such as an oven, microwave oven and other appliances, and other non-portable electronic devices.

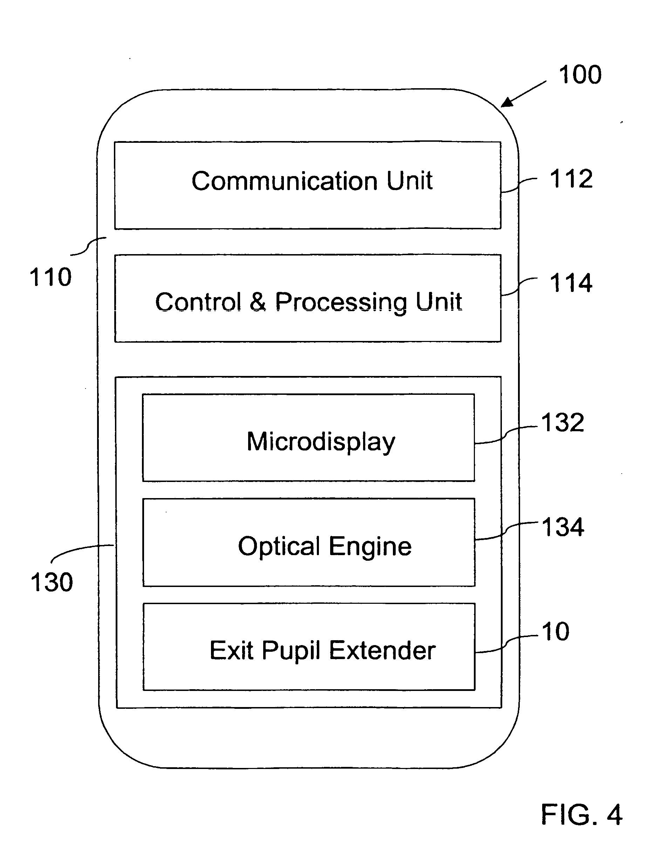

As shown in Figure 4, the portable device 100 has a housing 110 to a house a communication unit 112 for receiving and transmitting information from and to an external device (not shown). The portable device 100 also has a controlling and processing unit 114 for handling the received and transmitted information, and a virtual display system 130 for viewing. The virtual display system 130 includes a microdisplay or image source 132 and an optical engine 134. The controlling and processing unit 114 is operatively connected to the optical engine 134 to provide image data to the image source 132 to display an image thereon. The exit pupil extender (EPE), according to the present invention, can be optically linked to the optical engine 134.

Moreover, the application of the EPE of the present invention is not limited to virtual displays. The diffractive elements (H1, H2) are, in fact, optical couplers and light modulator devices for coupling light into the planar waveguide. Thus, the EPE can be viewed as an optical device comprised of a substrate waveguide and a plurality of optical couplers (or light modulator devices) disposed adjacent to or on the substrate for light coupling and manipulating purposes.

The image source, as depicted 3 in Figure 3 or as 132 in Figure 4, can be a sequential color LCOS (Liquid Crystal On Silicon) device, an OLED (Organic Light Emitting Diode) array, a MEMS (MicroElectro Mechanical System) device or any other suitable micro-display device operating in transmission, reflection or emission.

Thus, although the invention has been described with respect to a preferred embodiment thereof, it will be understood by those skilled in the art that the foregoing and various other changes, omissions and deviations in the form and detail thereof may be made without departing from the scope of this invention.

The use of the exit pupil extender is not limited to the described devices. Other purposes can be a terminal with a Near-To-Eye-Display, a cover projection miniature projector or a virtual miniature projector, a flat panel display, head up car display, a micro display used for image projection on a flat screen and a multifunctional optical network for car, office, public and home environment.

Other possible uses of the exit pupil extender can be seen in the field of smart cards and smart wallets, clips and personal access bodies.

## Claims

1. An optical device comprising:
a light-guiding structure (1) for guiding optical waves by means of total internal reflection, having two opposite major surfaces (1a, 1b) extending essentially parallel to the major plane of the structure (1),
a first light-coupling element (2) being carried by one of the opposite major surfaces (1a, 1b) of said structure (1) for incoupling optical waves from an image source (3) into the light-guiding structure (1),
at least one second light-coupling element (4) being carried by one of the opposite major surfaces (1a, 1b) of said structure (1) and being laterally displaced along the major plane of the structure (1) from said first light-coupling element (2) for outcoupling optical waves out of said structure (1) to be viewed by an observer's eye, **characterised in that**
at least one of the opposite major surfaces (1a, 1b) at the location of at least one of the first light-coupling element and the at least one second light-coupling element (2, 4) of the light-guiding structure (1) comprising a given finite curvature radius corresponding to the apparent focal distance for producing a virtual image at a preferable focal distance.

2. The optical device according to claim 1, wherein the entirety of both major surfaces (1a, 1b) has a common centre of curvature, wherein the centres of curvature are the same for said two opposite major surfaces (1a, 1b) of said light-guiding structure, respectively.

3. The optical device of claim 1, wherein the curvature radius corresponding to the focal distance is at least 0,5m, preferably in the range 0,5m to 1,5m.

4. The optical device of claim 1, wherein the first light-coupling element and the at least one second light-coupling element (2, 4) are located on the same side of the light-guiding structure (1).

5. The optical device of claim 1, wherein at least one of the first light-coupling element and/or the at least one second light-coupling element (2, 4) is a diffractive element.

6. The optical device of claim 5, wherein both the first light-coupling element and the at least one second light-coupling element (2,4) are diffractive elements and wherein the first light-coupling element and the at least one second light-coupling element (2, 4) are arranged on a cylindrical surface, the cylindrical axis of which is parallel to grating lines provided in said light-coupling elements (2, 4).

7. The optical device of claim 5, wherein both the first light-coupling element and the at least one second light-coupling element (2,4) are diffractive elements and wherein at least one of the first and the at least one second diffractive elements are comprised of surface relief structures.

8. The optical device of claim 1, wherein at least one of the first light-coupling element and the at least one second light-coupling element (2, 4) is a holographic optical element.

9. The optical device of claim 8, wherein said holographic optical element is embodied in said light-guiding structure (1) by recording said element as an interference pattern of two mutually coherent optical waves.

10. The optical device of claim 1, wherein said image source (3) is a sequential color LCOS (Liquid Crystal On Silicon) device, an OLED (Organic Light Emitting Diode) array, a MEMS (MicroElectro Mechanical System) device or any other suitable micro-display device operating in transmission, reflection or emission.

11. Use of a virtual display unit as an image source for an electronic device, preferably a portable communication device, the virtual display unit comprising the optical device according to claim 1.

12. Means for extending the exit pupil of an electronic device, comprising the optical device according to claim 1.

13. Use of the means for extending the exit pupil of claim 12 in a portable device, such as a mobile phone, personal digital assistant (PDA), communicator, portable Internet appliance, hand-hand computer, digital video and still camera, wearable computer, computer game device, specialized bring-to-the-eye product for viewing and other portable electronic devices.

14. Use of the means for extending the exit pupil of claim 12 in a non-portable device, such as a gaming device, vending machine, bank-o-mat, home appliance, such as an oven, microwave oven and other appliances, and other non-portable electronic devices.

15. Method for extending the exit pupil of an optical system comprising the following steps:
incoupling optical waves from an image source into a light-guiding structure (1) by means of a first light-coupling element (2) being carried by a light-guiding structure (1) having two opposite major surfaces (1a, 1b) extending essentially parallel to the major plane of the structure (1), wherein the optical waves propagate in said structure by means of total internal reflection,
outcoupling optical waves out of said structure (1) by means of at least one second light-coupling element (4) being carried by one of the opposite major surfaces of said structure and being laterally displaced along the major plane of the structure from said first light-coupling element (2),
**characterised in that**
the curvature radius of at least one of the opposite major surfaces (1a, 1b) at the location of at least one of the first and the at least one second light-coupling element (2,4) of the light-guiding structure (1) having a finite value corresponding to the apparent focal distance for producing a virtual image at the preferable focal distance.

## Patentansprüche

1. Optische Vorrichtung, umfassend:
eine Lichtleitstruktur (1) zum Leiten von optischen Wellen anhand einer internen Totalreflexion, die zwei gegenüberliegende Hauptflächen (1a, 1b) aufweist, die sich im Wesentlichen parallel zur Hauptebene der Struktur (1) erstrecken,
ein erstes Lichtkoppelelement (2), das von einer der gegenüberliegenden Hauptflächen (1a, 1b) der Struktur (1) getragen wird, um optische Wellen von einer Bildquelle (3) in die Lichtleitstruktur (1) einzukoppeln,
mindestens ein zweites Lichtkoppelelement (4), das von einer der gegenüberliegenden Hauptflächen (1a, 1b) der Struktur (1) getragen wird und seitlich an der Hauptebene der Struktur (1) entlang von dem ersten Lichtkoppelelement (2) verschoben ist, um optische Wellen aus der Struktur (1) auszukoppeln, die das Auge eines Betrachters sehen soll,
**dadurch gekennzeichnet, dass** mindestens eine der gegenüberliegenden Hauptflächen (1a, 1b) an der Stelle mindestens eines von dem ersten Lichtkoppelelement und dem mindestens einen zweiten Lichtkoppelelement (2, 4) der Lichtleitstruktur (1) einen bestimmten, endlichen Krümmungsradius umfasst, der dem wahrnehmbaren Fokalabstand entspricht, um ein virtuelles Bild in einem wünschenswerten Fokalabstand zu erzeugen.

2. Optische Vorrichtung nach Anspruch 1, wobei die Gesamtheit der beiden Hauptflächen (1a, 1b) einen gemeinsamen Krümmungsmittelpunkt aufweist, wobei die Krümmungsmittelpunkte für die beiden gegenüberliegenden Hauptflächen (1a, 1b) der Lichtleitstruktur jeweils gleich sind.

3. Optische Vorrichtung nach Anspruch 1, wobei der Krümmungsradius, der dem Fokalabstand entspricht, mindestens 0,5 m beträgt und bevorzugt in dem Bereich von 0,5 m bis 1,5 m liegt.

4. Optische Vorrichtung nach Anspruch 1, wobei das erste Lichtkoppelelement und das mindestens eine zweite Lichtkoppelelement (2, 4) sich auf derselben Seite der Lichtleitstruktur (1) befinden.

5. Optische Vorrichtung nach Anspruch 1, wobei mindestens eines von dem ersten Lichtkoppelelement und/oder dem mindestens einen zweiten Lichtkoppelelement (2, 4) ein beugendes Element ist.

6. Optische Vorrichtung nach Anspruch 5, wobei sowohl das erste Lichtkoppelelement als auch das mindestens eine zweite Lichtkoppelelement (2, 4) beugende Elemente sind, und wobei das erste Lichtkoppelelement und das mindestens eine zweite Lichtkoppelelement (2, 4) auf einer zylindrischen Oberfläche angeordnet sind, deren zylindrische Achse zu Gitterlinien parallel ist, die in den Lichtkoppelelementen (2, 4) bereitgestellt werden.

7. Optische Vorrichtung nach Anspruch 5, wobei sowohl das erste Lichtkoppelelement als auch das mindestens eine zweite Lichtkoppelelement (2, 4) beugende Elemente sind, und wobei mindestens eines von dem ersten und dem mindestens einen zweiten beugenden Element aus oberflächlichen Reliefstrukturen besteht.

8. Optische Vorrichtung nach Anspruch 1, wobei mindestens eines von dem ersten Lichtkoppelelement und dem mindestens einen zweiten Lichtkoppelelement (2, 4) ein holographisches optisches Element ist.

9. Optische Vorrichtung nach Anspruch 8, wobei das holographische optische Element in der Lichtleitstruktur (1) ausgebildet ist, indem das Element als Interferenzbild von zwei gegenseitig kohärenten optischen Wellen aufgezeichnet wird.

10. Optische Vorrichtung nach Anspruch 1, wobei die Bildquelle (3) eine sequenzielle farbige LCOS-(Flüssigkristall auf Silizium) Vorrichtung, eine OLED-(organische Leuchtdioden) Anordnung, eine MEMS-(mikroelektrisches mechanisches System) Vorrichtung oder eine beliebige andere geeignete Mikroanzeigevorrichtung ist, die mit Transmission, Reflexion oder Emission funktioniert.

11. Verwendung einer virtuellen Anzeigeeinheit als Bildquelle für eine elektronische Vorrichtung, bevorzugt eine tragbare Kommunikationsvorrichtung, wobei die virtuelle Anzeigeeinheit, die optische Vorrichtung nach Anspruch 1 umfasst.

12. Mittel zum Verlängern der Ausgangspupille einer elektronischen Vorrichtung, umfassend die optische Vorrichtung nach Anspruch 1.

13. Verwendung des Mittels zum Verlängern der Ausgangspupille von Anspruch 12, in einer tragbaren Vorrichtung, wie etwa in einem Mobiltelefon, einem persönlichen digitalen Assistenten (PDA), einem Kommunikationsgerät, einem tragbaren Internetgerät, einem Taschencomputer, einer digitalen Video- und Bildkamera, einem anziehbaren Computer, einer Computerspielkonsole, einem speziellen Augenannäherungsprodukt zum Visualisieren und anderen tragbaren elektronischen Vorrichtungen.

14. Verwendung des Mittels zum Verlängern der Ausgangspupille von Anspruch 12, in einer nicht tragbaren Vorrichtung, wie etwa in einer Spielkonsole, einem Verkaufsautomat, einem Bankautomat, einem Haushaltsgerät, wie etwa einem Herd, einer Mikrowelle und anderen Geräten, und anderen nicht tragbaren elektronischen Vorrichtungen.

15. Verfahren zum Verlängern der Ausgangspupille eines optischen Systems, das folgende Schritte umfasst:
Einkoppeln optischer Wellen aus einer Bildquelle in eine Lichtleitstruktur (1) anhand eines ersten Lichtkoppelelements (2), das von der Lichtleitstruktur (1) getragen wird, die zwei gegenüberliegende Hauptflächen (1a, 1b) aufweist, die sich im Wesentlichen parallel zur Hauptebene der Struktur (1) erstrecken, wobei sich die optischen Wellen in der Struktur anhand einer internen Totalreflexion verbreiten,
Auskoppeln von optischen Wellen aus der Struktur (1) anhand mindestens eines zweiten Lichtkoppelelements (4), das von einer der gegenüberliegenden Hauptflächen der Struktur getragen wird und seitlich an der Hauptebene der Struktur entlang von dem ersten Lichtkoppelelement (2) aus verschoben ist,
**dadurch gekennzeichnet, dass** der Krümmungsradius mindestens einer der gegenüberliegenden Hauptflächen (1a, 1b) an der Stelle mindestens eines von dem ersten und dem mindestens einen zweiten Lichtkoppelelement (2, 4) der Lichtleitstruktur (1) einen finiten Wert aufweist, der dem wahrnehmbaren Fokalabstand entspricht, um ein virtuelles Bild auf dem wünschenswerten Fokalabstand zu erzeugen.

## Revendications

1. Dispositif optique comprenant :
une structure de guidage de lumière (1) pour guider des ondes optiques au moyen d'une réflexion interne totale, ayant deux surfaces majeures opposées (1a, 1b) s'étendant sensiblement parallèlement au plan majeur de la structure (1),
un premier élément de couplage de lumière (2) porté par l'une des surfaces majeures opposées (1a, 1b) de ladite structure (1) pour coupler vers l'intérieur des ondes optiques d'une source d'images (3) dans la structure de guidage de lumière (1),
au moins un deuxième élément de couplage de lumière (4) porté par l'une des surfaces majeures opposées (1a, 1b) de ladite structure (1) et déplacé latéralement le long du plan majeur de la structure (1) à partir dudit premier élément de couplage de lumière (2) pour coupler vers l'extérieur des ondes optiques sortant de ladite structure (1) à regarder par l'oeil d'un observateur, **caractérisé en ce que**
au moins l'une des surfaces majeures opposées (1a, 1b) à l'emplacement de l'au moins un du premier élément de couplage de lumière et de l'au moins un deuxième élément de couplage de lumière (2, 4) de la structure de guidage de lumière (1) comprend un rayon de courbure fini donné correspondant à la distance focale apparente pour produire une image virtuelle à une distance focale préférable.

2. Dispositif optique selon la revendication 1, dans lequel l'intégralité des deux surfaces majeures (1a, 1b) a un centre de courbure commun, dans lequel les centres de courbure sont identiques respectivement pour lesdites deux surfaces majeures opposées (1a, 1b) de ladite structure de guidage de lumière.

3. Dispositif optique selon la revendication 1, dans lequel le rayon de courbure correspondant à la distance focale est au moins de 0,5 m, de préférence dans la plage de 0,5 m à 1,5 m.

4. Dispositif optique selon la revendication 1, dans lequel le premier élément de couplage de lumière et l'au moins un deuxième élément de couplage de lumière (2, 4) se trouvent sur le même côté de la structure de guidage de lumière (1).

5. Dispositif optique selon la revendication 1, dans lequel au moins l'un du premier élément de couplage de lumière et/ou de l'au moins un deuxième élément de couplage de lumière (2, 4) est un élément de diffraction.

6. Dispositif optique selon la revendication 5, dans lequel le premier élément de couplage de lumière et l'au moins un deuxième élément de couplage de lumière (2, 4) sont des éléments de diffraction et dans lequel le premier élément de couplage de lumière et l'au moins un deuxième élément de couplage de lumière (2, 4) sont agencés sur une surface cylindrique dont l'axe cylindrique est parallèle aux lignes de réseau fournies dans lesdits éléments de couplage de lumière (2, 4).

7. Dispositif optique selon la revendication 5, dans lequel le premier élément de couplage de lumière et l'au moins un deuxième élément de couplage de lumière (2, 4) sont des éléments de diffraction et dans lequel au moins l'un du premier élément de diffraction et de l'au moins un deuxième élément de diffraction se compose de structures de relief de surface.

8. Dispositif optique selon la revendication 1, dans lequel au moins l'un du premier élément de couplage de lumière et de l'au moins un deuxième élément de couplage de lumière (2, 4) est un élément optique holographique.

9. Dispositif optique selon la revendication 8, dans lequel ledit élément optique holographique est incorporé à ladite structure de guidage de lumière (1) en enregistrant ledit élément en tant que motif d'interférence de deux ondes optiques mutuellement cohérentes.

10. Dispositif optique selon la revendication 1, dans lequel ladite source d'images (3) est un dispositif séquentiel de cristal liquide sur silicium, LCOS, un réseau de diodes électroluminescentes organiques, OLED, un dispositif à système micro-électromécanique, MEMS, ou n'importe quel autre dispositif de micro-affichage approprié fonctionnant en transmission, en réflexion ou en émission.

11. Usage d'une unité d'affichage virtuelle en tant que source d'images pour un dispositif électronique, de préférence un dispositif de communication portable, l'unité d'affichage virtuelle comprenant le dispositif optique selon la revendication 1.

12. Moyen d'extension de la pupille de sortie d'un dispositif électronique, comprenant le dispositif optique selon la revendication 1.

13. Usage du moyen d'extension de la pupille de sortie selon la revendication 12 dans un dispositif portable, comme un téléphone portable, un assistant numérique personnel, PDA, un communicateur, un appareil Internet portable, un ordinateur portatif, une caméra vidéo numérique, un appareil photo numérique, un ordinateur portable, un dispositif de jeu informatique, un produit de visualisation spécialisé et d'autres dispositifs électroniques portables.

14. Usage du moyen d'extension de la pupille de sortie selon la revendication 12 dans un dispositif non portable, comme un dispositif de jeu, une machine de distribution, un distributeur de billets, un appareil ménager, comme un four, un four micro-ondes ou un autre appareil, et d'autres dispositifs électroniques non portables.

15. Procédé d'extension de la pupille de sortie d'un système optique comprenant les étapes suivantes :
le couplage vers l'intérieur d'ondes optiques d'une source d'images dans une structure de guidage de lumière (1) au moyen d'un premier élément de couplage de lumière (2) porté par une structure de guidage de lumière (1) ayant deux surfaces majeures opposées (1a, 1b) s'étendant sensiblement parallèlement au plan majeur de la structure (1), dans lequel les ondes optiques se propagent dans ladite structure au moyen d'une réflexion interne totale,
le couplage vers l'extérieur d'ondes optiques sortant de ladite structure (1) au moyen d'au moins un deuxième élément de couplage de lumière (4) porté par l'une des surfaces majeures opposées de ladite structure et latéralement déplacé le long du plan majeur de la structure à partir dudit premier élément de couplage de lumière (2),
**caractérisé en ce que**
le rayon de courbure d'au moins l'une des surfaces majeures opposées (1, 1b) à l'emplacement d'au moins l'un du premier élément de couplage de lumière et de l'au moins un deuxième élément de couplage de lumière (2, 4) de la structure de guidage de lumière (1) a une valeur finie correspondant à la distance focale apparente pour produire une image virtuelle à la distance focale préférable.
